# EUROPEAN PATENT SPECIFICATION

(11) **EP 1 284 251 B1**
(45) Date of publication and mention of the grant of the patent: **28.09.2011**
(21) Application number: 01307003.2
(22) Date of filing: 17.08.2001
(51) Int. Cl.: C04B 38/00, C04B 41/87, C04B 35/573, C04B 35/80

(54) **Silicon carbide-based, porous, lightweight, heat-resistant structural material and manufacturing method therefor**
Poröses, leichtes und hitzebeständiges Strukturmaterial auf Siliciumkarbidbasis und Herstellungsverfahren dafür
Matériau structural poreux, leger et resistant à chaleur à base de carbure de silicium, et son procédé de fabrication

(43) Date of publication of application: 19.02.2003
(73) Proprietor: Tani, Eiji, Tosu-shi, Saga (JP); National Institute of Advanced Industrial Science and Technology, Tokyo 100-8921 (JP)
(72) Inventor: Tani, Eiji, Saga (JP)
(74) Representative: Findlay, Alice Rosemary

(56) References cited:
- DE-A- 2 123 571
- DE-A- 3 327 659
- DE-A- 10 008 686
- DE-A- 19 823 507

## Description

The present invention relates to silicon carbide-based, porous, lightweight, heat-resistant structural materials which are formed by a two-step reaction bonding method and which retain their moulded shapes after sintering, and to manufacturing methods therefor. More particularly, the present invention relates to a silicon carbide-based, porous, lightweight, heat-resistant structural material which is suitable for use in various applications as, for example, a high-temperature structural member, a heat exchanger, a heat insulator, a high-temperature filter, and a furnace member; and to a manufacturing method therefor.

Since silicon carbide-based ceramics are lightweight and have superior heat resistance, abrasion resistance, corrosion resistance, and so on, in recent years, the ceramic has been widely used in various applications as a polishing member and a grinding stone as well as a high-temperature anticorrosion member, a heater member, an abrasion resistant member, and the like. Since the silicon carbide ceramic is generally formed by a sintering technique, this ceramic has been used in its dense block form, and accordingly, the silicon carbide ceramic has not been used in practice as a filter having a shape which can be changed according to function, a honeycomb-shaped lightweight porous structure, and the like.

Recently, research has started on the porous, lightweight, heat-resistant ceramics, and for example, a cordierite-based honeycomb-shaped ceramic having a low coefficient of thermal expansion has been formed by sintering an extruded part of the ceramic and has been used as a catalyst carrier. As a carbon-based ceramic, a ceramic formed by using wood may be mentioned; however, this ceramic has inferior oxidation resistance. In addition to the ceramics described above, the following proposals have been disclosed.
(1) A sintered body having a porosity of approximately 35% is formed by mixing a powdered silicon carbide having a large particle size with powdered carbon, moulding the mixture formed thereby, and infiltrating molten silicon into the moulded part (Kaji et al., Journal of the Ceramic Society of Japan published by The Ceramic Society of Japan, vol. 99, p. 63-67, 1991).
(2) A Si-Al-O-C or Si-Al-N-C ceramic which retains its shape and has a low shrinkage rate is obtained by infiltrating a slurry, which contains an organic silicon polymer (polymethylsiloxane) and silicon or a powdered mixture of silicon and aluminium, into corrugated cardboard three times, drying the corrugated cardboard after each infiltration, and firing the corrugated cardboard thus treated at 1,450°C in an inert atmosphere or in a nitrogen atmosphere (Siber, et al., 101st Annual Meeting & Exposition of the American Ceramic Society, 1999).

With method 1 described above, since compacted silicon carbide powder is used, complicated shapes cannot be easily formed, and the porosity is approximately 35% and is different from that of the structure of corrugated cardboard or the like.

With method 2 described above, a complicated shape can be easily formed. However, since this method uses reaction-bonding of the silicon or the mixture of silicon and aluminium provided on the corrugated cardboard or the like with carbon or nitrogen, depending on the distribution of the powdered silicon or aluminium on the surface of the corrugated cardboard, the thickness of the formed ceramic may be non-uniform, the strength thereof may not be enough in some cases, and when a plurality of corrugated cardboard layers are laminated to each other, the bonding strength between the layers may not be satisfactory. In addition to these methods described above, a method has been considered in which corrugated cardboard is carbonised and is then infiltrated with molten silicon. However, as described in the first comparative example set out below, the carbonised corrugated cardboard has a high shrinkage rate and is very brittle, and hence, there is a problem in that the corrugated cardboard may be damaged unless appropriately reinforced.

Through research on a method for manufacturing a fibre reinforced silicon carbide-based composite, it was discovered that with a melt infiltration method using molten silicon, since silicon is added from the outside the reaction volume increased, and a matrix composed of dense, amorphous carbon formed by carbonising a phenolic resin hardly reacted with the molten silicon. However, it was also discovered that a matrix which was composed of still porous amorphous carbon and silicon carbide having superior molten silicon wettability, which was formed by reaction-bonding of powdered silicon with a phenolic resin, was easily infiltrated with molten silicon, see, Japanese Patent Application No. 11-201388. During the reaction-bonding mentioned above, the reaction volume decreases.

In accordance with one aspect of the present invention, a method for manufacturing a silicon carbide-based, porous, lightweight, heat-resistant structural material comprises a step of preparing one of a porous structural body containing carbon which remains after the porous structural body is fired in an evacuated or an inert atmosphere and a porous structural body which is decomposed during firing in an evacuated or an inert atmosphere, the porous structural body comprising paper, such as corrugated cardboard or cardboard, each porous structure body having a framework which retains the shape of the porous structural body after firing, a slurry containing a resin used as a carbon source and powdered silicon, and molten silicon; a step of infiltrating the slurry into the porous structural body; a step of carbonizing the porous structural body infiltrated with the slurry at 900 to 1,350°C in an evacuated or an inert atmosphere; a step of performing reaction-bonding of the carbonized porous structural body at 1,350°C or more in an evacuated or an inert atmosphere so as to form silicon carbide having superior molten silicon wettability and to simultaneously form open pores caused by the reaction-bonding during which the reaction volume decreases; and a subsequent step of infiltrating molten silicon into the porous structural body at 1,300 to 1,800°C in an evacuated or an inert atmosphere.

With the method of the invention, it is possib!e to overcome the various problems of conventional methods for manufacturing a silicon carbide-based, porous, lightweight, heat-resistant structural material.

A silicon carbide-based, porous, lightweight, heat-resistant structural material is provided which can retain its moulded shape and which can be easily formed into complicated shapes.

Through intensive research on a method for manufacturing the silicon carbide-based, porous, lightweight, heat-resistant structural material, it was discovered that a silicon carbide-based, porous, lightweight, heat-resistant structural material in a complicated shape could be easily manufactured while still retaining the shape of a framework forming the porous structural body. In the present invention, a porous structural body formed from paper having a framework forming the shape of the porous structural body is infiltrated with powdered silicon and a resin; porous silicon carbide and remaining carbon portions are formed by reaction between the powdered silicon, the resin, and the carbon contained in the porous structural body; and the porous framework formed by the reaction described above is infiltrated with molten silicon; thereby forming the silicon carbide based structural material. During the reaction forming the silicon carbide, the reaction volume decreases.

In the method described above, a porous structural body in which the slurry can be received and carbonised is preferably used.

In addition, in the method described above, preferred resins are a phenolic resin, a furan resin, or an organometallic resin such as polycarbosilane and in addition cane sugar. These resins may be used alone or in combination. Furthermore, powdered carbon, powdered graphite, or carbon black may be added, and as an aggregate or an antioxidant, powdered silicon carbide, silicon nitride, zirconia, zircon, alumina, silica, mullite, molybdenum disilicide, boron carbide, boron, or the like may also be added.

The silicon used in the method described above may be a pure silicon metal, and in addition, a silicon alloy of magnesium, aluminium, titanium, chromium, manganese, iron, cobalt, nickel, copper, zinc, zirconium, niobium, molybdenum, tungsten, or the like, or the mixture thereof may also be used.

The invention will now be further described by way of example only with reference to the accompanying drawings in which:

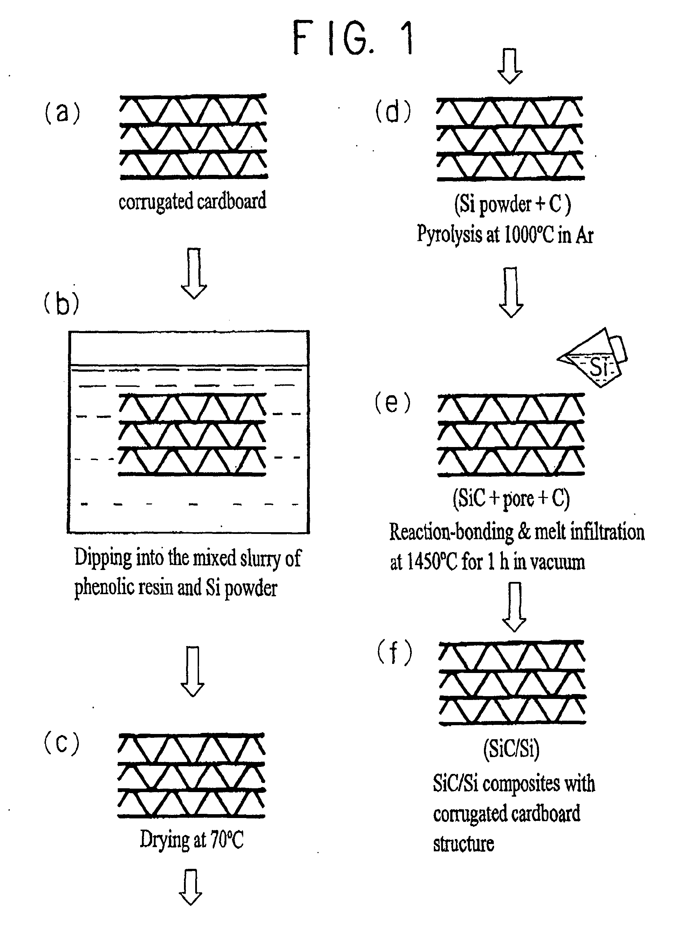

Fig. 1 is a view for illustrating steps of forming a silicon carbide-based, porous, lightweight, heat-resistant structural material according to the present invention.

Preferred embodiments of the method will be described.

In the method , first, a porous structural body (Fig. 1(a)) such as corrugated cardboard is coated with a slurry composed of powdered silicon and a phenolic resin or the like used as a molten carbon source or is dipped in the slurry (Fig. 1(b)), and subsequently, a porous structural body having a desired shape is formed and dried at 70°C (Fig. 1(c)).

After the porous structural body described above is fired in an evacuated or an inert atmosphere, the carbon remains and constitutes a framework which retains the original shape of the porous structural body, and as a material for the porous structural body, paper such as corrugated cardboard or cardboard; vegetal matter, such as wood, straw, or bamboo; cloth such as woven cloth or non-woven cloth; or a porous plastic in the form of a sponge or a sheet; may be used as described above.

As the resin material infiltrated into the framework of the porous structural body, at least one selected from the group consisting of a phenolic resin, a furan resin, an organometallic polymer, and cane sugar may be used. In addition, as the powdered silicon used for forming silicon carbide, a fine powder is preferably used, and a fine powder having an average particle diameter of 20 µm or less is particularly preferable. When the powder has a large average particle diameter, it may be pulverized using a ball mill or the like so as to form a fine powder.

Next, the porous structural material thus formed is carbonized at approximately 900 to 1,350°C in an evacuated or an inert atmosphere using an argon gas or the like. In the carbonized composite formed thereby, the framework of the porous structural body is formed of a mixture of the carbon obtained by pyrolysis of the structural body, the carbon obtained by carbonization of the phenolic resin, and the powdered silicon (Fig. 1(d)). In addition, the carbon of the phenolic resin reinforces the framework of the structural body, and hence, the carbonized porous structural body has a sufficient strength to be machined.

This carbonized porous structural body is fired at 1, 350°C or more in an inert atmosphere such as an evacuated or an argon atmosphere so that reaction occurs between the carbon and the silicon, whereby a porous silicon carbide having a superior molten silicon wettability is formed on the framework of the structural body. In addition, since the reaction volume decreases during this reaction, open pores are simultaneously formed due to the reaction mentioned above. As a result, the framework is formed of the porous silicon carbide and the remaining carbon.

Next, this porous structural body is heated to approximately 1,300 to 1,800°C in an evacuated or inert atmosphere, and the porous silicon carbide and the carbon portions on the framework are infiltrated with molten silicon (Fig. 1(e)), thereby forming a silicon carbide-based, porous, lightweight, heat-resistant structural material (Fig. 1(f)). The reaction-bonding of the silicon and the carbon and the melt infiltration of the molten silicon may be performed in the same thermal treatment, and every thermal treatment including the carbonization may be performed in the same thermal treatment.

The ratio of the powdered silicon to the carbon formed of the resin is preferably determined so that Si/C is in the range of from 0.05 to 4 on an atomic basis.

Next, the method will be described in more detail with reference to examples; however, the present invention is not limited thereto.

### First Example

A phenolic resin and powdered silicon were prepared so that the ratio of the carbon obtained by carbonization of the phenolic resin to the silicon was 5 to 4 on an atomic basis, and ethyl alcohol was added to the phenolic resin and the powdered silicon, thereby yielding a slurry. After the slurry was processed by using a ball mill for 1 day in order to decrease the particle diameter of the silicon, corrugated cardboard was infiltrated with the slurry and was then dried.

Next, this corrugated cardboard was carbonized by firing at 1,000°C in an argon atmosphere for 1 hour. Reaction-bonding and silicon melt infiltration were simultaneously performed for the carbonized porous body thus formed at 1,450°C in an evacuated atmosphere for 1 hour, thereby yielding a silicon carbide-based, porous, lightweight, heat-resistant composite which retained the shape of the corrugated cardboard. The corrugated cardboard shrank during carbonization, and the size thereof was slightly smaller than the original one, such as approximately 91%, 97%, and 90% of the original size in the longitudinal, the transverse, and the thickness directions, respectively. However, the composite described above retained the molded shape of the corrugated cardboard and had a sufficient mechanical strength to be machined.

### Second Example

A phenolic resin and powdered silicon were prepared so that the ratio of the carbon obtained by carbonization of the phenolic resin to the silicon was 5 to 2 on an atomic basis, and ethyl alcohol was added to the phenolic resin and the powdered silicon, thereby yielding a slurry. After the slurry was processed by using a ball mill for 1 day in order to decrease the particle diameter of the silicon, corrugated cardboard was infiltrated with the slurry and was then dried. Next, carbonization, reaction-bonding, and silicon melt infiltration were performed for this corrugated cardboard in manners equivalent to those in the first example, thereby yielding a silicon carbide-based, porous, lightweight, heat-resistant composite which retained the shape of the corrugated cardboard. The corrugated cardboard shrank during carbonization, so that the size thereof was slightly smaller than the original one, such as approximately 87%, 90%, and 88% of the original size in the longitudinal, the transverse, and the thickness directions, respectively. However, the composite described above retained the molded shape of the corrugated cardboard and had a sufficient mechanical strength to be machined.

### Third Example

A mixture of a phenolic resin and powdered silicon was prepared so that the ratio of the carbon obtained by carbonization of the phenolic resin to the silicon was 5 to 2 on an atomic basis, powdered silicon carbide in the same amount as that of the silicon was added to the mixture described above, and ethyl alcohol was added to the mixture thus formed, thereby yielding a slurry. After the slurry was processed by using a ball mill for 1 day in order to decrease the particle diameter of the silicon, corrugated cardboard was infiltrated with the slurry and was then dried. Next, carbonization, reaction-bonding, and silicon melt infiltration were performed for this corrugated cardboard in manners equivalent to those in the first example, thereby yielding a silicon carbide-based, porous, lightweight, heat-resistant composite which retained the shape of the corrugated cardboard. The corrugated cardboard shrank during carbonization, so that the size thereof was slightly smaller than the original one, such as approximately 93%, 99%, and 92% of the original size in the longitudinal, the transverse, and the thickness directions, respectively. However, the composite described above retained the molded shape of the corrugated cardboard and had a sufficient mechanical strength to be machined.

### First Comparative Example

In a manner equivalent to that in the first example, corrugated cardboard was only carbonated, and subsequently, reaction-bonding and silicon melt infiltration were performed, thereby yielding a silicon carbide-based, porous, lightweight, heat-resistant composite in the form of a shrunk corrugated cardboard. The corrugated cardboard significantly shrank during carbonization, and the size thereof finally obtained was approximately 78%, 76%, and 48% of the original size in the longitudinal, the transverse, and the thickness directions, respectively. In the case in which the corrugated cardboard was only carbonized, the strength thereof after carbonization was low, and it was difficult to machine it.

### Second Comparative Example

A phenolic resin dissolved in ethyl alcohol was infiltrated into corrugated cardboard and was then dried. In manners equivalent to those in the first example, carbonization, reaction-bonding, and silicon melt infiltration were performed for this corrugated cardboard; however, the silicon melt infiltration could not be performed due to the occurrence of choking.

### Third Comparative Example

A phenolic resin and powdered silicon carbide were prepared so that the ratio of the carbon obtained by carbonization of the phenolic resin to the silicon carbide was 8 to 5 in weight ratio, and ethyl alcohol was added to the phenolic resin and the powdered silicon carbide, thereby yielding a slurry. After the slurry was processed by using a ball mill for 3 hours for mixing, corrugated cardboard was infiltrated with the slurry and was then dried. In manners equivalent to those in the first example, carbonization, reaction-bonding, and silicon melt infiltration were performed for this corrugated cardboard; however, the silicon melt infiltration could not be uniformly performed.

In the method for manufacturing the silicon carbide-based, porous, lightweight, heat-resistant composite according to the present invention, a phenolic resin and powdered silicon are applied to the framework of the porous structural body such as corrugated cardboard, the silicon carbide having superior molten silicon wettability and the open pores are formed by reaction-bonding, and silicon is infiltrated into the open pores mentioned above, whereby the silicon carbide-based, porous, lightweight, heat-resistant composite can be manufacture which retains the original shape of the porous structural body. Consequently, this composite can be easily formed into a complicated shape, and the composite described above can be used in various applications as, for example, a high-temperature structural member, a heat exchanger, a heat insulator, a high-temperature filter, and a furnace member.

## Claims

1. A method for manufacturing a silicon carbide-based, porous, lightweight, heat-resistant structural material, comprising the steps of:
preparing either a porous structural body containing carbon which remains after the porous structural body is fired in an evacuated or an inert atmosphere or a porous structural body which is decomposed during firing in an evacuated or an inert atmosphere, the porous structural body comprising paper, such as corrugated cardboard or cardboard, and having a framework which retains the shape of the porous structural body after firing, a slurry containing a resin used as a carbon source and powdered silicon, and molten silicon;
infiltrating the slurry Into the porous structural body;
carbonising the porous structural body as 900 to 1,350°C in an evacuated or an inert atmosphere;
performing reaction-bonding of the porous structural body at 1,350°C or more in an evacuated or an inert atmosphere so as to form silicon carbide having a superior molten silicon wettability and to simultaneously form open pores caused by the reaction-bonding during which the reaction volume decreases; and
infiltrating molten silicon into the porous structural body at 1,300 to 1,800°C in an evacuated or an inert atmosphere.

2. A method according to claim 1, wherein the resin comprises at least one of the group consisting of a phenolic resin, a furan resin, an organometallic polymer, and cane sugar.

## Patentansprüche

1. Verfahren zur Herstellung eines porösen, leichten, wärmebeständigen Strukturmaterials auf Siliziumcarbidbasis, das die folgenden Schritte umfasst:
Herstellen eines porösen Strukturkörpers, der Kohlenstoff enthält, der nach dem Brennen des porösen Strukturkörpers in einer evakuierten oder inerten Atmosphäre zurückbleibt, oder eines porösen Strukturkörpers, der sich während des Brennens in einer evakuierten oder inerten Atmosphäre zersetzt, wobei der poröse Strukturkörper Papier umfasst, wie z.B. Wellpappe oder Karton, und ein Gefüge, das nach dem Brennen die Gestalt des porösen Strukturkörpers beibehält, einen Schlamm, der ein als Kohlenstoffquelle verwendetes Harz und Siliziumpulver enthält, und geschmolzenes Silizium hat,
Infiltrieren des Schlamms in den porösen Strukturkörper,
Karbonisierung des porösen Strukturkörpers bei 900 bis 1350°C in einer evakuierten oder inerten Atmosphäre,
Durchführen von Rektionsbinden des porösen Strukturkörpers bei 1350°C oder mehr in einer evakuierten oder inerten Atmosphäre, um Siliziumcarbid zu bilden, das eine hervorragende Benetzbarkeit gegenüber geschmolzenem Silizium, hat, und um gleichzeitig offene Poren zu bilden, die durch das Reaktionsbinden verursacht werden, währenddessen das Reaktionsvolumen abnimmt, und
Infiltrieren von geschmolzenem Silizium in den porösen Strukturkörper bei 1300 bis 1800°C in einer evakuierten oder inerten Atmosphäre.

2. Verfahren nach Anspruch 1, bei dem das Harz wenigstens eines aus der Gruppe bestehend aus einem Phenolharz, einem Furanharz, einem metallorganischen Polymer und Rohrzucker umfasst.

## Revendications

1. Procédé de fabrication d'un matériau structurel à base de carbure de silicium, poreux, léger, résistant à la chaleur comprenant les étapes suivantes :
la préparation d'un corps structurel poreux contenant du carbone qui demeure après que le corps structurel poreux est cuit dans une atmosphère de vide ou inerte ou d'un corps structurel poreux qui est décomposé durant la cuisson dans une atmosphère de vide ou inerte, le corps structurel poreux comprenant du papier, tel que du carton ondulé ou du carton, et ayant une structure qui conserve la forme du corps structurel poreux après la cuisson, une pâte contenant une résine utilisée comme source de carbone et du silicium pulvérulent, et du silicium fondu,
l'infiltration de la pâte dans le corps structurel poreux ;
la carbonisation du corps structurel poreux à une température de 900 à 1350°C dans une atmosphère de vide ou inerte ;
l'exécution d'un frittage-réaction du corps structurel poreux à 1350°C ou plus dans une atmosphère de vide ou inerte de façon à former un carbure de silicium ayant une mouillabilité de silicium fondu supérieure et à former simultanément des pores ouverts causés par le frittage-réaction durant lequel le volume de réaction diminue ; et
l'infiltration du silicium fondu dans le corps structurel poreux à une température de 1300 à 1800°C dans une atmosphère de vide ou inerte.

2. Procédé selon la revendication 1, dans lequel la résine comprend au moins un élément du groupe consistant en une résine phénolique, une résine furanique, un polymère organométallique et du sucre de canne.
